# EUROPÄISCHE PATENTANMELDUNG

(11) **EP 1 709 938 A1**
(43) Veröffentlichungstag der Anmeldung: **11.10.2006**
(21) Anmeldenummer: 06000877.8
(22) Anmeldetag: 17.01.2006
(51) Int. Cl.: A61C 9/00, A61C 5/06

(54) **Dentalkomponentenanmischeinheit**

(30) Priorität: 08.04.2005 DE 102005016399
(71) Anmelder: Renfert GmbH, 78247 Hilzingen (DE)
(72) Erfinder: Pilz, Christian, 88090 Immenstaad/Bodensee (DE); Özyurt, Cim, 78315 Radolfzell (DE)
(74) Vertreter: Daub, Thomas

(57) **Zusammenfassung**

Die Erfindung geht aus von einer Dentalkomponentenanmischeinheit, insbesondere zum Anmischen von einem Alginat mit einer Flüssigkeit, die zum rotierenden Antrieb vorgesehen ist, mit einer Flügeleinheit (10), die eine Rührfunktion aufweist.

Es wird vorgeschlagen, dass die Flügeleinheit (10) neben der Rührfunktion eine Knetfunktion aufweist.

## Beschreibung

### Stand der Technik

Die Erfindung geht aus von einer Dentalkomponentenanmischeinheit nach dem Oberbegriff des Anspruchs 1.

Es ist eine Dentalkomponentenanmischeinheit bekannt, die zum rotierenden Antrieb mittels einer Maschine vorgesehen ist. Die Dentalkomponentenanmischeinheit weist eine aus Blech hergestellte Flügeleinheit auf, die einen koaxial zur Rotationsachse angeordneten Blechsteg aufweist, von dem sich aus zu einer ersten und zu einer zweiten, der ersten Seite unmittelbar gegenüberliegenden Seite Blechrührflügel bezogen auf die Rotationsachse radial nach außen erstrecken. Die Blechrührflügel schließen einen Winkel von 180° ein.

Der Erfindung liegt insbesondere die Aufgabe zugrunde, eine Dentalkomponentenanmischeinheit mit verbesserten Anmischergebnissen, und zwar insbesondere beim Anmischen von einem Alginat mit einer Flüssigkeit, bereitzustellen. Sie wird gemäß der Erfindung durch die Merkmale der unabhängigen Ansprüche gelöst. Weitere Ausgestaltungen ergeben sich aus den Unteransprüchen.

Vorteile der Erfindung

Die Erfindung geht aus von einer Dentalkomponentenanmischeinheit, insbesondere zum Anmischen von einem Alginat mit einer Flüssigkeit, die zum rotierenden Antrieb vorgesehen ist, mit einer Flügeleinheit, die eine Rührfunktion aufweist, und zwar insbesondere zu Beginn eines Mischvorgangs.

Es wird vorgeschlagen, dass die Flügeleinheit neben der Rührfunktion eine Knetfunktion aufweist. Unter "Mischen" soll in diesem Zusammenhang insbesondere ein Oberbegriff von "Rühren" und "Kneten" verstanden werden. Dabei soll unter einem "Rühren" insbesondere ein Durchdringen von Komponenten mit Flügeln verstanden werden, während unter einem "Kneten" insbesondere eine Verformung von zumindest teilweise verrührten Komponenten verstanden werden soll, bei der zumindest ein Großteil einer zu mischenden Komponentenmasse in ihrer Gesamtheit gezielt entlang einer Anmischbehälterwand und/oder eines Anmischbehälterbodens entlang gewalkt wird. Ferner soll unter einer "Flügeleinheit" eine Einheit verstanden werden, die zum Eingriff mit den Komponenten während eines Anmischvorgangs vorgesehen ist.

Die Erfindung geht von der Erkenntnis aus, dass bei verschiedenen Dentalkomponenten, und zwar insbesondere bei einem Alginat, eine gezielte Knetfunktion zu besonders vorteilhaften Mischergebnissen führt. Es können in einer für Alginate erforderlichen besonders kurzen Anmischzeit von ca. 20 s bis 30 s Rückstände von unvermischtem Alginat, insbesondere in Pulverform, sowie Blasen zumindest weitgehend vermieden und es kann eine vorteilhaft gleichmäßig cremige Masse mit homogener Konsistenz erzielt werden.

Die Knetfunktion kann durch zahlreich verschiedene, dem Fachmann als sinnvoll erscheinende Mittel bzw. Ausgestaltungen erzielt werden. Eine besondere vorteilhafte Knetfunktion kann erreicht werden, indem zumindest ein Großteil einer Antriebsfläche der Flügeleinheit in einem Winkelbereich kleiner als 180° bezogen auf die Rotationsachse angeordnet ist. Unter einer "Antriebsfläche" soll in diesem Zusammenhang insbesondere während eines vorbestimmten Betriebs eine eine Bewegungsenergie auf die Komponentenmasse übertragende Fläche der Flügeleinheit verstanden werden. Ferner soll unter einem "Großteil" in diesem Zusammenhang mehr als 50%, vorzugsweise mehr als 70% und besonders bevorzugt mehr als 80% verstanden werden. Im Gegensatz zu einer zumindest weitgehend über einen Winkelbereich von 360° symmetrischen Angriffsflächenverteilung kann durch eine Anordnung des Großteils der Antriebsfläche der Flügeleinheit in einem Winkelbereich kleiner als 180°, vorzugsweise kleiner als 100° und besonders vorteilhaft kleiner als 90° eine unsymmetrische Komponentenmassenverteilung und eine vorteilhafte Walkbewegung eines Großteils der Komponentenmasse in ihrer Gesamtheit entlang einer Anmischbehälterwand und/oder entlang eines Anmischbehälterbodens erzielt werden.

In einer weiteren Ausgestaltung wird vorgeschlagen, dass die Flügeleinheit in einem Winkelbereich kleiner als 180°, vorzugsweise kleiner als 100° und besonders vorteilhaft kleiner als 90° bezogen auf die Rotationsachse zumindest zwei in Drehantriebsrichtung hintereinander angeordnete Flügel aufweist. Es können trotz einer relativ langsamen Drehbewegung zumindest zwei Antriebsschläge auf die Komponentenmasse in einer relativ kurzen Zeitspanne erreicht und insbesondere kann bezogen auf die Rotationsachse ein vorteilhafter asymmetrischer Antrieb der Komponentenmasse für eine Walkbewegung erzielt werden.

Ferner wird vorgeschlagen, dass zumindest ein Flügel der Flügeleinheit zumindest teilweise und vorzugsweise mindestens 50% der Flügeleinheit und besonders vorteilhaft mehr als 80% der Flügeleinheit von einem Strangprofil gebildet ist. Es kann konstruktiv einfach ein zu hoher Energieeintrag vorteilhaft vermieden und es können gezielt an verschiedene Rühr- und insbesondere an Knetfunktionen angepasste Formen einfach und kostengünstig realisiert werden.

Das Strangprofil kann dabei verschiedene, dem Fachmann als sinnvoll erscheinende Querschnittsflächen aufweisen, wie vieleckige, insbesondere dreieckige, rechteckige, und/oder ovale Querschnittsflächen usw. Besonders vorteilhaft weist das Strangprofil jedoch eine runde Querschnittsfläche auf, wodurch vorteilhafte Strömungsverhältnisse und insbesondere eine relativ kleinflächige Flügeleinheit erzielt werden kann, an der nach einem Entnehmen der Flügeleinheit aus der gemischten Komponentenmasse vorteilhaft nur geringe Mengen der Komponentenmasse hängen bleiben.

In einer weiteren Ausgestaltung wird vorgeschlagen, dass die Flügeleinheit zumindest einen, vorzugsweise zwei Flügel umfasst, die in zumindest einem Bereich, der vorzugsweise mindestens 20% und besonders bevorzugt mehr als 50% des Flügels ausmacht, beabstandet zur Rotationsachse eine Längserstreckung zumindest im Wesentlichen parallel zur Rotationsachse aufweisen. Dabei soll unter "im Wesentlichen parallel" insbesondere eine geradlinige, jedoch auch eine eine oder mehrere Kurven und/oder eine oder mehrere Ecken umfassende, Erstreckung mit einer resultierenden Hauptkomponente im Wesentlichen parallel zur Rotationsachse verstanden werden, wobei die resultierende Hauptkomponente eine Winkelabweichung vorzugsweise kleiner als 10° und besonders vorteilhaft kleiner als 5° aufweist. Durch eine entsprechende Ausgestaltung kann ein vorteilhafter Antrieb nahe einer Anmischbehälterwand erzielt werden, und zwar insbesondere, wenn zumindest ein Flügel, der in zumindest einem Bereich beabstandet zur Rotationsachse eine Längserstreckung zumindest im Wesentlichen parallel zur Rotationsachse aufweist, in wenigstens einem Bereich, vorzugsweise über 30% und besonders bevorzugt über 50% seiner Längserstreckung, zu einer Anmischbehälterwand einen Radialabstand kleiner als 1,7 mm, vorzugsweise kleiner als 1,5 mm und besonders bevorzugt kleiner als 1 mm aufweist. Sind dabei zumindest zwei entsprechende Flügel vorgesehen, die in zumindest einem Teilbereich des Bereichs von der Rotationsachse unterschiedlich weit beabstandet sind, kann ein vorteilhafter Impuls in radialer Richtung auf die Komponentenmasse erzielt und es können vorteilhaft im Hinblick auf den Antrieb ergänzende Antriebsflächen erzielt werden.

Zudem wird vorgeschlagen, dass sich einer der Flügel mit einem Flügelteil, in einer Betriebslage betrachtet, vertikal über den anderen Flügel hinaus erstreckt. Es kann ein vorteilhaftes Zusammenspiel zwischen den Flügeln erreicht werden, und zwar insbesondere, wenn der sich vertikal über den anderen Flügel hinaus erstreckende Flügelteil des einen Flügels einen größeren Radialabstand zur Rotationsachse aufweist als ein sich in Richtung eines Überschneidungsbereichs in axialer Richtung anschließender Flügelteil des einen Flügels. Der Flügelteil kann vorteilhaft als Abstreifer genutzt werden, und zwar insbesondere, wenn dieser in zumindest einem Bereich innerhalb der Flügeleinheit den größten Radialabstand zur Rotationsachse aufweist bzw. in wenigstens einem Bereich zu einer Anmischbehälterwand einen Radialabstand kleiner als 1 mm, vorzugsweise kleiner als 0,7 mm und besonders bevorzugt kleiner als 0,5 mm aufweist. Feuchte Komponentenmasse und Flüssigkeit kann mit dem anderen Flügel vorteilhaft nach oben befördert und mit dem vom als Abstreifer dienenden Flügelteil angehäuften trockenen, insbesondere noch pulverförmigen, Material vermischt werden.

Ferner wird vorgeschlagen, dass an zumindest einem Flügel, der in zumindest einem Bereich beabstandet zur Rotationsachse eine Längserstreckung im Wesentlichen parallel zur Rotationsachse aufweist, sich ein Bodenflügel der Flügeleinheit anschließt. Dabei soll unter einem "Bodenflügel" insbesondere ein Flügel verstanden werden, der dazu vorgesehen ist, mit einem Anmischbehälterboden zusammenzuwirken. Durch eine entsprechende Ausgestaltung kann ein Anmischbehälterboden vorteilhaft zu einer Knetfunktion genutzt werden und das Mischergebnis weiter verbessert werden, und zwar insbesondere, wenn die Flügeleinheit in einem Winkelbereich kleiner als 180°, vorzugsweise kleiner als 100° und besonders bevorzugt kleiner als 90° bezogen auf die Rotationsachse zumindest zwei Bodenflügel aufweist, wenn zumindest ein Großteil einer Angriffsfläche der Bodenflügel in einem Winkelbereich kleiner als 180°, vorzugsweise kleiner als 100° und besonders bevorzugt kleiner als 90° bezogen auf die Rotationsachse angeordnet ist und/oder wenn zumindest einer der Bodenflügel von einem Bodenteil des Anmischbehälters einen Axialabstand kleiner als 2 mm, vorzugsweise kleiner als 1,8 mm und besonders bevorzugt kleiner als 1,5 mm aufweist.

Weist die Flügeleinheit im Bereich der Rotationsachse zumindest zum Großteil einen Freiraum auf, kann eine Ansammlung einer ungemischten Komponente, insbesondere eine Ansammlung von Alginat, im Bereich der Rotationsachse an einem im Mischbetrieb eine relativ kleine Bewegung durchführenden Teilbereich der Flügeleinheit vermieden werden. Dabei soll in diesem Zusammenhang unter einem "Großteil" insbesondere mehr als 50%, vorteilhaft mehr als 70% und besonders bevorzugt mehr als 90% einer in Richtung der Rotationsachse gemessenen Gesamthöhe verstanden werden.

Ferner wird vorgeschlagen, dass die Dentalkomponentenanmischeinheit, insbesondere die Flügeleinheit, eine Antihaftbeschichtung aufweist. Unter einer "Antihaftbeschichtung" soll in diesem Zusammenhang insbesondere eine zumindest einen Teilbereich der Dentalkomponentenanmischeinheit bzw. der Flügeleinheit bedeckende Beschichtung verstanden werden, die zumindest geringere Hafteigenschaften zu den zu mischenden Komponenten, insbesondere zu einem Alginatgemisch, aufweist als ein Grundmaterial der Dentalkomponentenanmischeinheit bzw. der Flügeleinheit. Dabei sind sämtliche, dem Fachmann als sinnvoll erscheinende Beschichtungsmaterialien denkbar, wie Kunststoffe, keramische Werkstoffe, metallische Werkstoffe, Legierungen usw. Besonders vorteilhaft wird jedoch eine zumindest teflonhaltige Beschichtung bzw. eine polytetrafluoräthylenhaltige Beschichtung gewählt.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Die Merkmale der Unteransprüche können insbesondere auch unabhängig von den Merkmalen der abhängigen Patentansprüche einzeln oder in Kombination zu vorteilhaften Ausgestaltungen genutzt werden, die ausdrücklich mit der Offenbarung umfasst sein sollen.

### Es zeigen:

- Fig. 1: eine Ansicht eines Systems mit einer Dentalkomponentenanmischeinheit und einem Anmischbehälter schräg von oben,
- Fig. 2: das System aus Figur 1 in einer Draufsicht,
- Fig. 3: das System aus Figur 1 in einer Seitenansicht,
- Fig. 4: einen Schnitt entlang der Linie A-A in Figur 2,
- Fig. 5: einen Schnitt entlang der Linie B-B in Figur 2,
- Fig. 6: einen Schnitt entlang der Linie C-C in Figur 3,
- Fig. 7: eine vergrößerte Darstellung der Dentalkomponentenanmischeinheit in Alleinstellung schräg von oben,
- Fig. 8: die Dentalkomponentenanmischeinheit aus Figur 7 in einer Draufsicht,
- Fig. 9: die Dentalkomponentenanmischeinheit aus Figur 7 in einer Vorderansicht und
- Fig. 10: die Dentalkomponentenanmischeinheit aus Figur 7 in einer Seitenansicht.

### Beschreibung des Ausführungsbeispiels

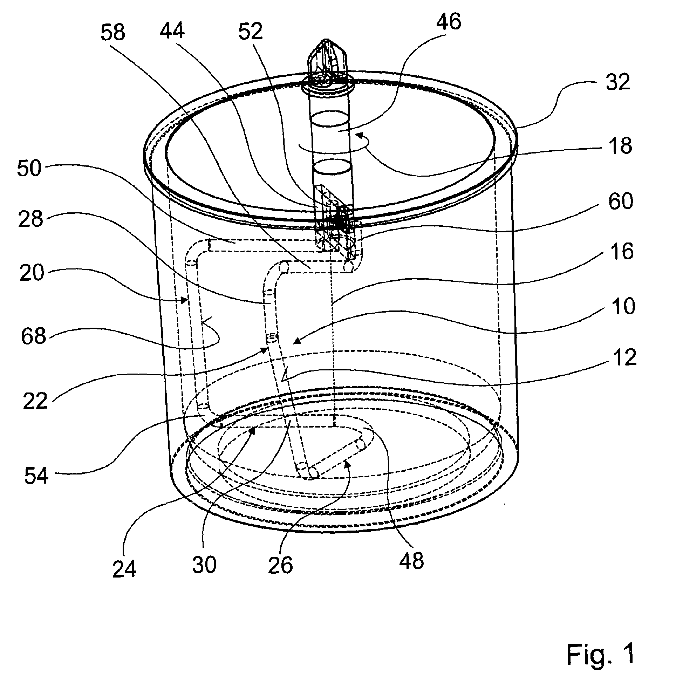

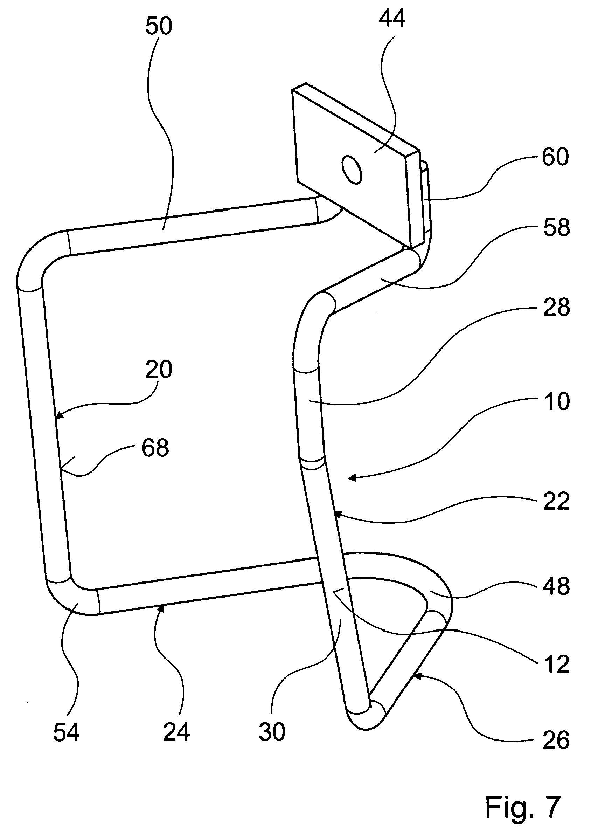

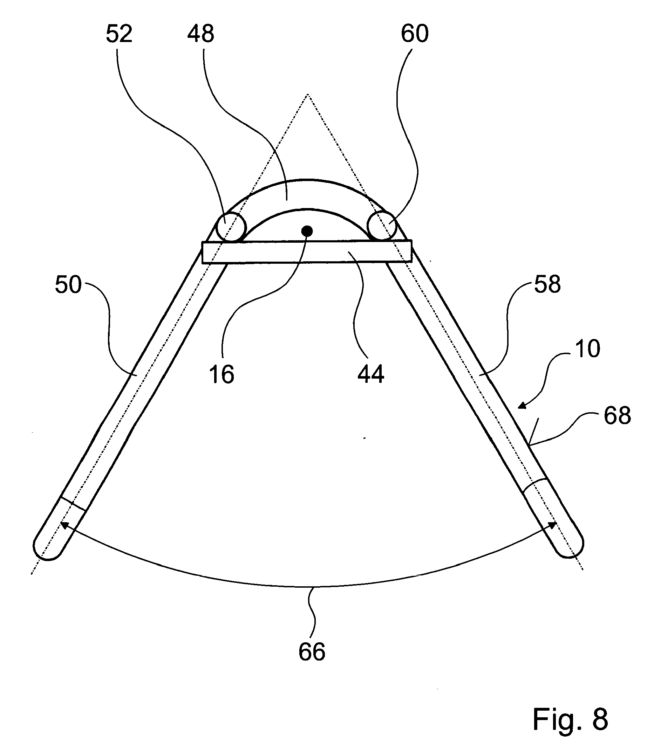

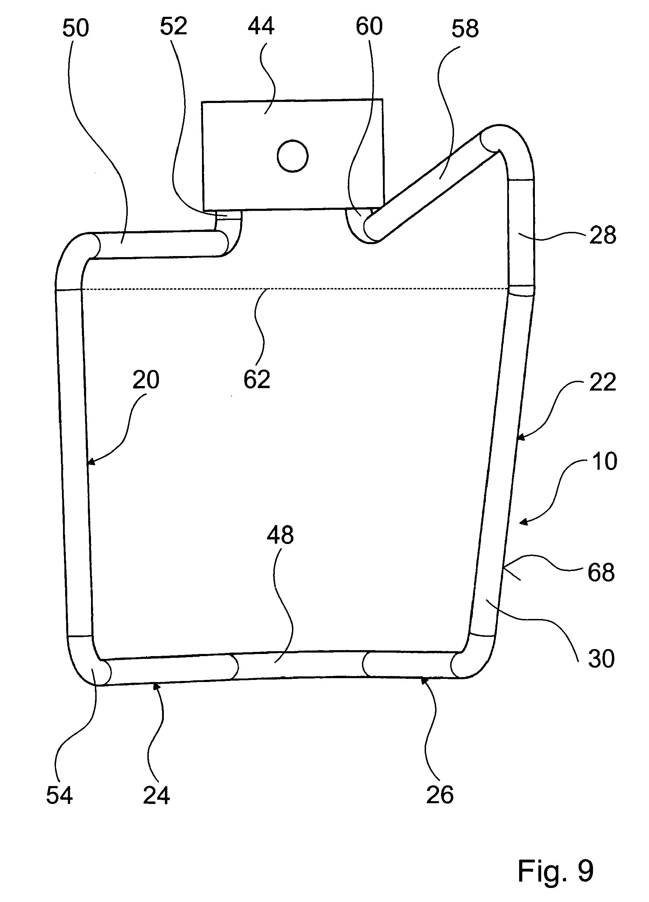

Figur 1 zeigt ein System mit einer Dentalkomponentenanmischeinheit zum Anmischen von Alginat mit Wasser sowie einem topfförmigen Anmischbehälter 32, der eine im Wesentlichen zylinderförmige Anmischbehälterwand aufweist. Die Dentalkomponentenanmischeinheit ist zum rotierenden Antrieb vorgesehen und weist hierfür eine Trägerplatte 44 aus Blech auf, an der eine Antriebswelle 46 befestigt ist (Figuren 1 sowie 7 bis 10). Die Antriebswelle 46 ist in einem nicht näher dargestellten Deckel gelagert. Die Antriebswelle 46 und der Deckel sind dazu vorgesehen, an eine Vakuummaschine angeschlossen zu werden, mittels der für einen Mischbetrieb die Antriebswelle 46 rotierend antreibbar und im Anmischbehälter ein Vakuum bzw. ein Unterdruck erzeugbar ist.

Ferner umfasst die Dentalkomponentenanmischeinheit auf der der Antriebswelle 46 abgewandten Seite eine Flügeleinheit 10, die eine Rührfunktion und eine Knetfunktion aufweist. Die Flügeleinheit 10 ist von einem Strangprofil mit einer runden Querschnittsfläche gebildet, und zwar von einem einteiligen, aus Metall hergestellten Draht mit einer Stärke von ca. 4 mm. Neben einem Metall sind jedoch auch andere, dem Fachmann als sinnvoll erscheinende Materialien denkbar, wie insbesondere Kunststoff usw. Ferner sind auch andere, dem Fachmann als sinnvoll erscheinende Materialstärken denkbar. Die Flügeleinheit 10 der Dentalkomponentenanmischeinheit ist mit einer Antihaftbeschichtung 68 aus einem Nickel-Teflon-Gemisch beschichtet.

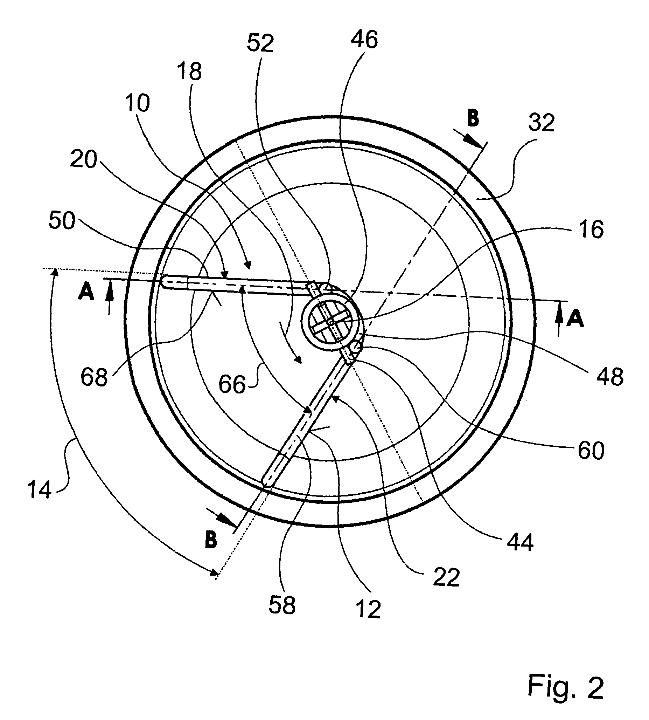

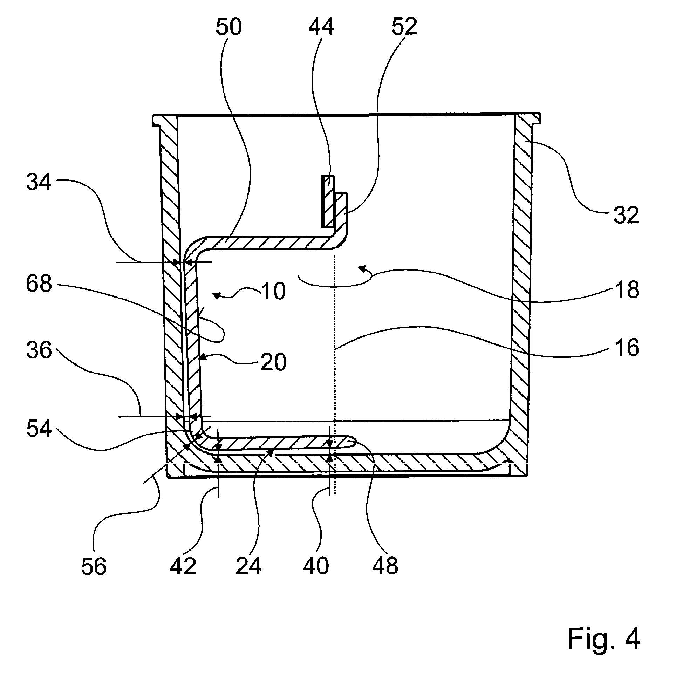

Ein Großteil, und zwar über 90%, einer Antriebsfläche 12 der Flügeleinheit 10 ist in einem Winkelbereich 14 von ca. 65° bezogen auf die Rotationsachse 16 angeordnet. Die Flügeleinheit weist in dem Winkelbereich 14 insgesamt vier in Drehantriebsrichtung 18 hintereinander angeordnete Flügel 20, 22, 24, 26 auf, und zwar zwei Flügel 20, 22, die beabstandet zur Rotationsachse 16 jeweils eine Längserstreckung im Wesentlichen parallel zur Rotationsachse 16 aufweisen, und zwei Bodenflügel 24, 26, die sich jeweils im von der Trägerplatte 44 abgewandten Ende der Flügel 20, 22 anschließen, im Wesentlichen senkrecht zur Rotationsachse 16 ausgerichtet sind und sich ausgehend von den Flügeln 20, 22 radial nach innen im Wesentlichen in Richtung der Rotationsachse 16 erstrecken. Die geradlinig ausgebildeten Bodenflügel 24, 26 sind im Bereich der Rotationsachse 16 mit einem bogenförmigen Verbindungsstück 48 verbunden, welches sich mit einem kleinen Abstand von ca. 8 mm um die Rotationsachse 16 herum erstreckt. Die Bodenflügel 24, 26 weisen in einem Anschlussbereich zu den Flügeln 20, 22 einen kleineren Axialabstand 42 zu einem Anmischbehälterboden auf als in einem Anschlussbereich zu dem Verbindungsstück 48, und zwar beträgt der Axialabstand 42 im Anschlussbereich zu den Flügeln 20, 22 ca. 1,2 mm und ein Axialabstand 40 im Anschlussbereich zum Verbindungsstück 48 ca. 1,4 mm zum Anmischbehälterboden (Figur 4). Die Bodenflügel 24, 26 schließen dabei einen Winkel 66 von ca. 60° ein (Figur 2).

Der geradlinig ausgebildete Flügel 20 ist über ein im Wesentlichen senkrecht zur Rotationsachse 16, radial nach innen im Wesentlichen in Richtung der Rotationsachse 16 verlaufenden Querbügel 50 mit einem an der Trägerplatte 44 angeschweißten, im Wesentlichen parallel zur Rotationsachse 16 verlaufenden Haltebügel 52 der Flügeleinheit 10 verbunden und weist im Anschlussbereich zum Querbügel 50 einen Radialabstand 34 von ca. 0,95 mm zur Anmischbehälterwand und in einem Anschlussbereich zum Bodenflügel 24 einen Radialabstand 36 von ca. 1,2 mm auf (Figur 4). Der Flügel 20 weist damit einen, ausgehend von der Antriebswelle 46 in Richtung Bodenflügel 24, geringfügig zunehmenden Radialabstand zur Anmischbehälterwand bzw. einen geringfügig abnehmenden Radialabstand zur Rotationsachse 16 auf. Der Flügel 20 ist über ein bogenförmiges, einem Radius eines Anmischbehälterwandstücks im Wesentlichen angepasstes Verbindungsstück 54 mit dem Bodenflügel 24 verbunden. Das Verbindungsstück 54 weist zu dem angrenzenden Anmischbehälterwandstück einen Abstand 56 von ca. 0,9 mm auf (Figur 4).

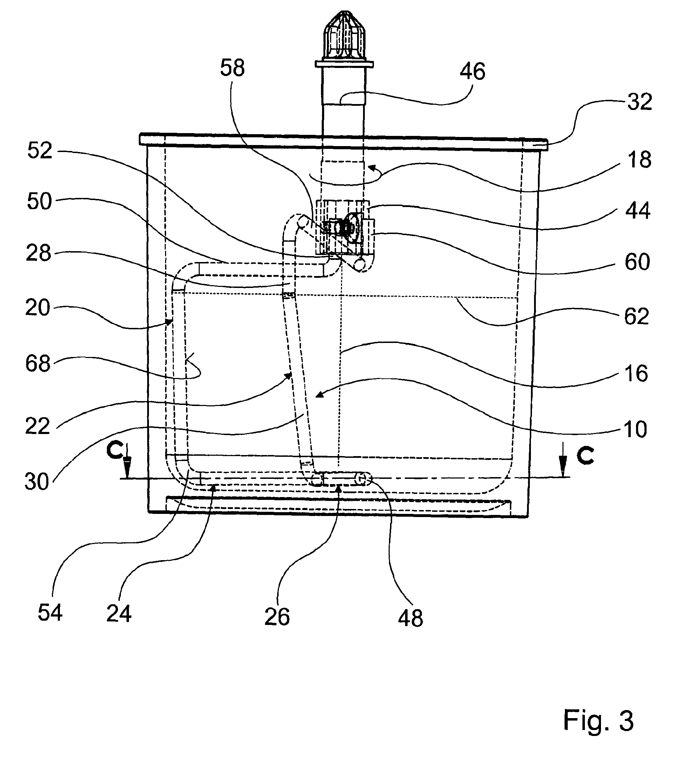

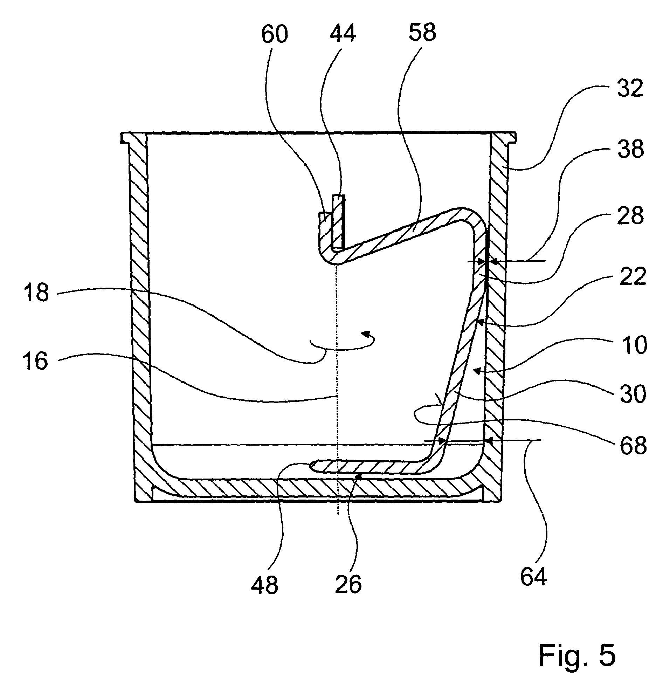

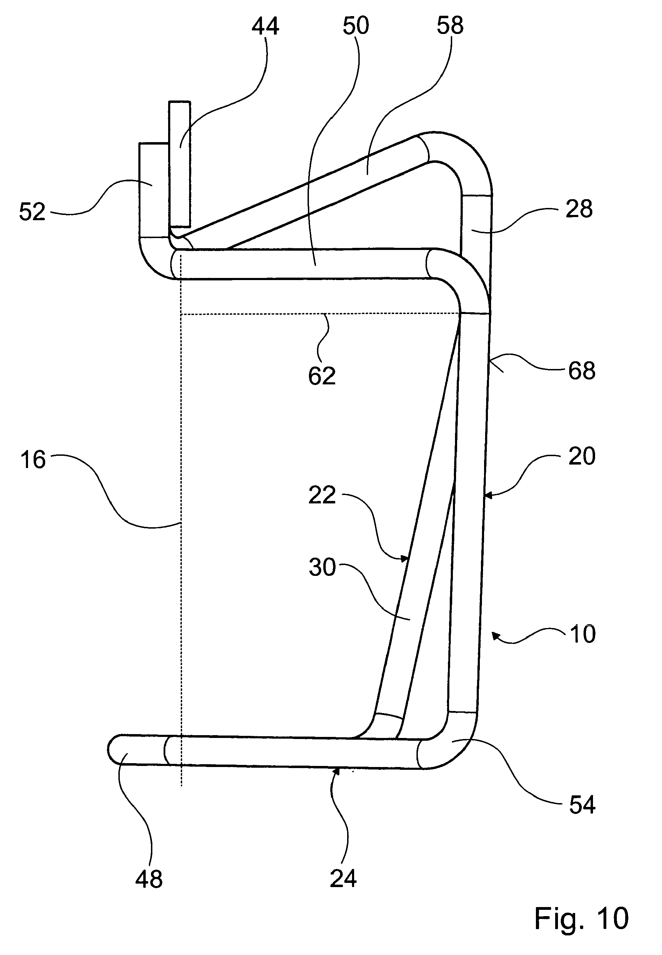

Der Flügel 22 ist über ein in einer dargestellten Betriebslage, in der die Rotationsachse 16 im Wesentlichen vertikal verläuft, mit einem ausgehend vom Flügel 22 schräg vertikal nach unten, radial nach innen im Wesentlichen in Richtung der Rotationsachse 16 verlaufenden Querbügel 58 mit einem an der Trägerplatte 44 angeschweißten, im Wesentlichen parallel zur Rotationsachse 16 verlaufenden Haltebügel 60 der Flügeleinheit 10 verbunden (Figur 5 und 10). Die Querbügel 50, 58 schließen entsprechend den Bodenflügeln 24, 26 einen Winkel 66 von ca. 60° ein (Figur 2). Der Flügel 22 erstreckt sich mit einem geradlinigen Flügelteil 28, in der Betriebslage betrachtet, vertikal über den Flügel 20 hinaus (Figuren 3 und 10). Der Flügelteil 28 ist parallel zur Rotationsachse 16 ausgerichtet und weist innerhalb der Flügeleinheit 10 den größten Radialabstand zur Rotationsachse 16 auf. Ein Radialabstand 38 zwischen dem Flügelteil 28 und einer angrenzenden Anmischbehälterwand beträgt ca. 0,5 mm (Figur 5). Der Flügelteil 28 schließt in einer Rotationsebene 62 an einen geradlinigen Flügelteil 30 des Flügels 20 an, der sich ausgehend von der Rotationsebene 62 schräg radial nach innen zur Rotationsachse 16 hin erstreckt, so dass dieser im Anschlussbereich zum Bodenflügel 26 einen Radialabstand 64 von ca. 10 mm aufweist. Die Flügel 20, 22 sind damit bis auf einen kleinen Überschneidungsbereich von der Rotationsachse 16 unterschiedlich weit beabstandet.

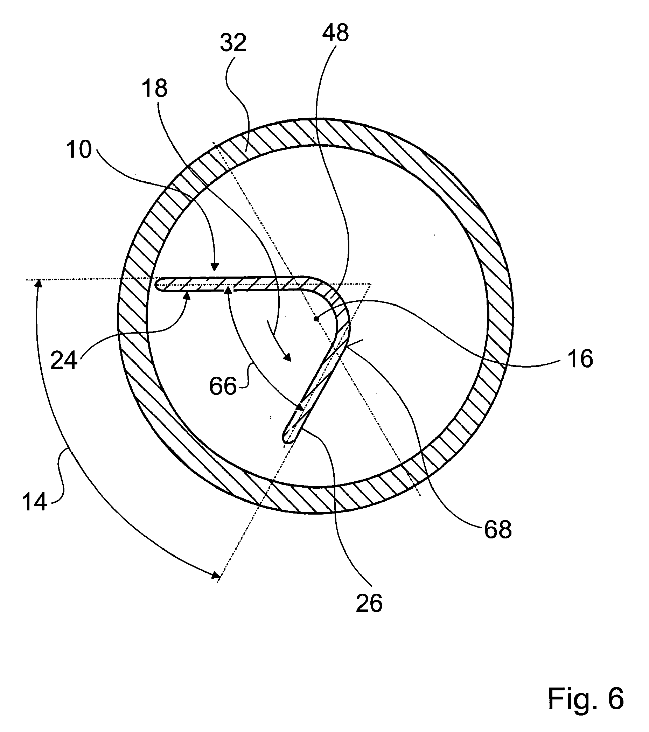

Die Flügeleinheit 10 weist in einer Seitenansicht im Wesentlichen eine zur Rotationsachse 16 hin offene U-Form auf, ist in einer Ansicht in Richtung der Rotationsachse 16 im Wesentlichen V-förmig ausgebildet, und zwar zur Anmischbehälterwand hin offen, und weist bis auf die Trägerplatte 44 im Bereich der Rotationsachse 16 über ihre gesamte Höhe einen Freiraum auf (Figuren 4 bis 7).

Die Bodenflügel 24, 26 weisen insbesondere eine Knetfunktion auf, während die Flügel 20, 22 Rühr- und Knetfunktionen aufweisen. Dabei besitzt der Flügel 20 insbesondere die Aufgabe, Flüssigkeit und feuchte Komponentenmasse nach oben in den Bereich des Flügelteils 28 zu befördern, der als Abstreifer dient und trockene Komponentenmasse von der Anmischbehälterwand abstreift. Der Flügel 20 endet, in vertikaler Richtung betrachtet, dabei unmittelbar in der Rotationsebene 62, in der der Flügelteil 28 des Flügels 22 beginnt, wodurch ein vorteilhafter Übergabebereich erreicht wird (Figur 3).

Bezugszeichen
- 10: Flügeleinheit
- 12: Antriebsfläche
- 14: Winkelbereich
- 16: Rotationsachse
- 18: Drehantriebsrichtung
- 20: Flügel
- 22: Flügel
- 24: Flügel
- 26: Flügel
- 28: Flügelteil
- 30: Flügelteil
- 32: Anmischbehälter
- 34: Radialabstand
- 36: Radialabstand
- 38: Radialabstand
- 40: Axialabstand
- 42: Axialabstand
- 44: Trägerplatte
- 46: Antriebswelle
- 48: Verbindungsstück
- 50: Querbügel

- 52: Haltebügel
- 54: Verbindungsstück
- 56: Abstand
- 58: Querbügel
- 60: Haltebügel
- 62: Rotationsebene
- 64: Radialabstand
- 66: Winkel
- 68: Antihaftbeschichtung

## Patentansprüche

1. Dentalkomponentenanmischeinheit, insbesondere zum Anmischen von einem Alginat mit einer Flüssigkeit, die zum rotierenden Antrieb vorgesehen ist, mit einer Flügeleinheit (10), die eine Rührfunktion aufweist,
**dadurch gekennzeichnet,**
**dass** die Flügeleinheit (10) neben der Rührfunktion eine Knetfunktion aufweist.

2. Dentalkomponentenanmischeinheit nach Anspruch 1,
**dadurch gekennzeichnet,**
**dass** zumindest ein Großteil einer Antriebsfläche (12) der Flügeleinheit (10) in einem Winkelbereich (14) kleiner als 180° bezogen auf die Rotationsachse (16) angeordnet ist.

3. Dentalkomponentenanmischeinheit nach Anspruch 2,
**dadurch gekennzeichnet,**
**dass** zumindest ein Großteil der Antriebsfläche (12) der Flügeleinheit (10) in einem Winkelbereich (14) kleiner als 100° bezogen auf die Rotationsachse (16) angeordnet ist.

4. Dentalkomponentenanmischeinheit nach einem der vorhergehenden Ansprüche,
**dadurch gekennzeichnet,**
**dass** die Flügeleinheit (10) in einem Winkelbereich (14) kleiner als 180° bezogen auf die Rotationsachse (16) zumindest zwei in Drehantriebsrichtung (18) hintereinander angeordnete Flügel (20, 22, 24, 26) aufweist.

5. Dentalkomponentenanmischeinheit nach dem Oberbegriff des Patentanspruchs 1 und insbesondere nach einem der vorhergehenden Ansprüche,
**dadurch gekennzeichnet,**
**dass** zumindest ein Flügel (20, 22, 24, 26) der Flügeleinheit (10) zumindest teilweise von einem Strangprofil gebildet ist.

6. Dentalkomponentenanmischeinheit nach Anspruch 5,
**dadurch gekennzeichnet,**
**dass** mindestens 50% der Flügeleinheit (10) von einem Strangprofil gebildet sind.

7. Dentalkomponentenanmischeinheit nach Anspruch 5 oder 6,
**dadurch gekennzeichnet,**
**dass** das Strangprofil in zumindest einem Bereich eine runde Querschnittsfläche aufweist.

8. Dentalkomponentenanmischeinheit nach einem der vorhergehenden Ansprüche,
**dadurch gekennzeichnet,**
**dass** die Flügeleinheit (10) zumindest einen Flügel (20, 22) umfasst, der in zumindest einem Bereich beabstandet zur Rotationsachse (16) eine Längserstreckung zumindest im Wesentlichen parallel zur Rotationsachse (16) aufweist.

9. Dentalkomponentenanmischeinheit nach Anspruch 8,
**dadurch gekennzeichnet,**
**dass** die Flügeleinheit (10) zumindest zwei Flügel (20, 22) umfasst, die in zumindest einem Bereich beabstandet zur Rotationsachse (16) jeweils eine Längserstreckung im Wesentlichen parallel zur Rotationsachse (16) aufweisen.

10. Dentalkomponentenanmischeinheit nach Anspruch 9,
**dadurch gekennzeichnet,**
**dass** die zwei Flügel (20, 22) in zumindest einem Teilbereich des Bereichs von der Rotationsachse (16) unterschiedlich weit beabstandet sind.

11. Dentalkomponentenanmischeinheit nach Anspruch 9 oder 10,
**dadurch gekennzeichnet,**
**dass** sich einer der Flügel (22) mit einem Flügelteil (28), in einer Betriebslage betrachtet, vertikal über den anderen Flügel (20) hinaus erstreckt.

12. Dentalkomponentenanmischeinheit nach Anspruch 11,
**dadurch gekennzeichnet,**
**dass** der sich vertikal über den anderen Flügel (20) hinaus erstreckende Flügelteil (28) des einen Flügels (22) einen größeren Radialabstand zur Rotationsachse (16) aufweist als ein sich in Richtung eines Überschneidungsbereichs in axialer Richtung anschließender Flügelteil (30) des einen Flügels (20).

13. Dentalkomponentenanmischeinheit nach Anspruch 11 oder 12,
**dadurch gekennzeichnet,**
**dass** der sich vertikal über den anderen Flügel (20) hinaus erstreckende Flügelteil (28) in zumindest einem Bereich innerhalb der Flügeleinheit (10) den größten Radialabstand zur Rotationsachse (16) aufweist.

14. Dentalkomponentenanmischeinheit zumindest nach Anspruch 8,
**dadurch gekennzeichnet,**
**dass** an zumindest einem Flügel (20, 22), der in zumindest einem Bereich beabstandet zur Rotationsachse (16) eine Längserstreckung im Wesentlichen parallel zur Rotationsachse (16) aufweist, ein Bodenflügel (24, 26) der Flügeleinheit (10) anschließt.

15. Dentalkomponentenanmischeinheit nach dem Oberbegriff des Anspruchs 1 und insbesondere nach einem der vorhergehenden Ansprüche,
**dadurch gekennzeichnet,**
**dass** die Flügeleinheit (10) in einem Winkelbereich (14) kleiner als 180° bezogen auf die Rotationsachse (16) zumindest zwei Bodenflügel (24, 26) aufweist.

16. Dentalkomponentenanmischeinheit nach Anspruch 15,
**dadurch gekennzeichnet,**
**dass** die Flügeleinheit (10) in einem Winkelbereich (14) kleiner als 100° bezogen auf die Rotationsachse (16) zumindest zwei Bodenflügel (24, 26) aufweist.

17. Dentalkomponentenanmischeinheit nach einem der Ansprüche 14 bis 16,
**dadurch gekennzeichnet,**
**dass** zumindest ein Großteil einer Angriffsfläche der Bodenflügel (24, 26) in einem Winkelbereich (14) kleiner als 180° bezogen auf die Rotationsachse (16) angeordnet ist.

18. Dentalkomponentenanmischeinheit nach einem der vorhergehenden Ansprüche,
**dadurch gekennzeichnet,**
**dass** die Flügeleinheit (10) im Bereich der Rotationsachse (16) zumindest zum Großteil einen Freiraum aufweist.

19. Dentalkomponentenanmischeinheit nach einem der vorhergehenden Ansprüche,
**dadurch gekennzeichnet,**
**dass** die Flügeleinheit (10) in einer Seitenansicht im Wesentlichen eine zur Rotationsachse (16) offene U-Form aufweist.

20. Dentalkomponentenanmischeinheit nach einem der vorhergehenden Ansprüche,
**dadurch gekennzeichnet,**
**dass** die Flügeleinheit (10) in einer Ansicht in Richtung der Rotationsachse (16) im Wesentlichen V-förmig oder C-förmig ausgebildet ist.

21. Dentalkomponentenanmischeinheit nach einem der vorhergehenden Ansprüche,
**gekennzeichnet durch**
eine Antihaftbeschichtung (68).

22. System mit einer Dentalkomponentenanmischeinheit zumindest nach Anspruch 8 und einem Anmischbehälter (32), wobei zumindest ein Flügel (20, 22), der in zumindest einem Bereich beabstandet zur Rotationsachse (16) eine Längserstreckung zumindest im Wesentlichen parallel zur Rotationsachse (16) aufweist, in wenigstens einem Bereich zu einer Anmischbehälterwand einen Radialabstand (34, 36, 38) kleiner als 1,7 mm aufweist.

23. System mit einer Dentalkomponentenanmischeinheit zumindest nach Anspruch 11 und einem Anmischbehälter (32), wobei der sich vertikal über den anderen Flügel (20) hinaus erstreckende Flügelteil (28) des einen Flügels (22) in wenigstens einem Bereich zu einer Anmischbehälterwand einen Radialabstand (38) kleiner als 1 mm aufweist.

24. System mit einer Dentalkomponentenanmischeinheit zumindest nach einem der Ansprüche 14 bis 17 und einem Anmischbehälter (32), wobei zumindest einer der Bodenflügel (24, 26) von einem Bodenteil des Anmischbehälters (32) einen Axialabstand (40, 42) kleiner als 2 mm aufweist.
